# NEUE EUROPÄISCHE PATENTSCHRIFT

(11) **EP 1 202 870 B2**
(45) Veröffentlichungstag und Bekanntmachung des Hinweises auf die Entscheidung über den Einspruch: **20.08.2008**
(45) Hinweis auf die Patenterteilung: 03.05.2006
(21) Anmeldenummer: 00949458.4
(22) Anmeldetag: 05.08.2000
(51) Int. Cl.: B60N 2/225

(54) **VERSTELLBESCHLAG FÜR SITZE MIT NEIGUNGSEINSTELLBARER LEHNE, INSBESONDERE FÜR KRAFTFAHRZEUGSITZE**
ADJUSTMENT ARMATURE FOR SEATS, ESPECIALLY MOTOR VEHICLE SEATS, WITH AN ADJUSTABLE INCLINABLE BACKREST
MECANISME DE REGLAGE POUR SIEGES DOTES D'UN DOSSIER A INCLINAISON REGLABLE, EN PARTICULIER POUR SIEGES DE VEHICULES

(30) Priorität: 14.08.1999 DE 19938666
(43) Veröffentlichungstag der Anmeldung: 08.05.2002
(73) Patentinhaber: KEIPER GmbH & Co. KG, 67657 Kaiserslautern (DE)
(72) Erfinder: SCHOLZ, Grit, D-42855 Remscheid (DE); FINNER, Holger, D-42499 Hückeswagen (DE); VEDDER, Andreas, D-42719 Solingen (DE)
(74) Vertreter: Patentanwälte Hosenthien-Held und Dr. Held
(86) Internationale Anmeldenummer: PCT/EP2000/007608
(87) Internationale Veröffentlichungsnummer: WO 2001/012461

(56) Entgegenhaltungen:
- EP-B1- 0 406 089
- DE-A1- 3 013 304
- FR-A- 2 743 032
- FR-A1- 2 729 346
- GB-B- 1 422 063
- US-A- 5 154 475

## Beschreibung

Die Erfindung betrifft einen Verstellbeschlag für Sitze mit neigungseinstellbarer Lehne, insbesondere für Kraftfahrzeugsitze, bei denen ein dem Sitzteil zugeordneter, fester Beschlagteil und ein der Lehne zugeordneter, verstellbarer Beschlagteil über ein Stellglied miteinander verbunden sind, wobei eine die Lage beider Beschlagteile zueinander bestimmende, als Getriebe ausgebildete Ver- und Feststelleinrichtung vorgesehen ist, und das Stellglied einen Exzenterabschnitt beinhaltet, auf dem der eine Beschlagteil gelagert ist, während der andere Beschlagteil den Exzenterabschnitt lagert, der aus zwei einen Mitnehmer bereichsweise überdeckenden, gegeneinander geneigten Keilsegmenten, aus einem zwischen deren Schmalseiten fassenden Mitnehmersegment und aus einem die Breitseiten der Keilsegmente auseinanderdrückenden Kraftspeicher gebildet ist, wobei das Stellglied bedarfsweise eine zentrale Aufnahme zur drehfesten Verbindung mit einer Übertragungsstange aufweist.

Aus der DE 44 36 101 A1 ist ein Verstellbeschlag der vorgenannten Art bekannt, bei dem die Keilsegmente mit ihren Innenflächen auf einem dem festen Beschlagteil zugehörigen Kragenzug abgestützt sind. Die Außenflächen der Keilsegmente werden von einer im der Rückenlehne zugehörigen Beschlagteil festsitzenden Lagerbuchse umfaßt. Zum Antrieb des Exzenterabschnittes faßt ein vom Mitnehmer abragender Mitnehmerarm zwischen die Schmalseiten der beiden Keilsegmente, während der Mitnehmer selbst im Kragenzug des festen Beschlagteiles gelagert ist. Dabei sind die Keilsegmente an ihren dem Mitnehmerarm gegenüberliegenden Breitseiten durch ein Federelement im Sinne der Aufrechterhaltung der Exzentrizität auseinandergedrückt. Um eine Ausgleichsbewegung der Exzentrizität im Falle unvermeidlicher Fertigungstoleranzen in den Lagerstellen und der Verzahnung der Bauteile beim Verstellen des der Rückenlehne zugehörigen Beschlagteiles zu ermöglichen, ist zwischen den Schmalseiten der Keilsegmente und dem Mitnehmerarm ein funktionsbedingter Spielraum vorhanden. Dadurch ergibt sich beim Verstellen des Beschlages, insbesondere bei Richtungsumkehr ein gewisser Leerweg, der sich für den Sitzbenutzer als Totgang bemerkbar macht.

Aufgabe der Erfindung ist es, einen Verstellbeschlag der eingangs genannten Art dahingehend zu verbessern, daß der Totgang ausgeschaltet wird.

Diese Aufgabe ist mit den im Kennzeichen des Patentanspruches 1 genannten Merkmalen gelöst. Infolge der Abstützung der Keilsegmente auf dem vom Mitnehmersegment freien Umfangsbereich des Mitnehmerringes wirkt bei einer durch die Mitnehmerbuchse auf den Mitnehmerring übertragenen Drehbewegung eine Reibkraft zwischen dem Mitnehmerring und den Keilsegmenten als antreibendes Moment. An der Außenseite der Keilsegmente wirkt das wesentlich geringere Reibmoment zwischen den Keilsegmenten und der Lagerbohrung des im vorliegenden Fall der Rückenlehne zugehörigen Beschlagteiles. Bis zu einer bestimmten, äußeren Last ist das Reibmoment zwischen den Keilsegmenten und dem Mitnehmerring ausreichend, um den Exzenterabschnitt zu verdrehen und damit den der Lehne zugehörigen Beschlagteil zu verstellen. Infolgedessen läßt sich der zur Rückenlehne gehörige Beschlagteil ohne erkennbaren Leerweg auch bei Richtungsumkehr verstellen. Während dieser Stellbewegung führen die Keilsegmente aufgrund fertigungsbedingter Zwangskräfte eine Ausgleichsbewegung aus, die sich den geometrischen Verhältnissen anpaßt, um die Spiele in Lagerstellen und im Zahneingriff zu eliminieren. Wenn nun die vorbestimmte, äußere Last überschritten wird, und das Reibmoment zwischen den Keilsegmenten und dem Mitnehmerring nicht mehr ausreicht, so verringert sich die Drehgeschwindigkeit des voreilenden Keilsegmentes, bis beide Keilsegmente bei einem bestimmten Kraftniveau unter Überwindung des auf Ihre Breitseiten wirkenden Kraftspeichers mit diesen Breitseiten aneinanderstoßen und sozusagen auf Block liegen, wobei auch das Mitnehmersegment des Mitnehmerringes auf einer Seite an einer Schmalseite eines Keilsegmentes in Anlage gelangen kann, so daß der der Rückenlehne zugehörige Beschlagteil weiter verstellt wird. Bei Betätigung des Mitnehmers wird demzufolge, unabhängig von der Drehrichtung, sofort der der Rückenlehne zugehörige Gelenkbeschlag verstellt. Dabei versteht es sich, daß die Mitnehmerbuchse nicht unbedingt ein durchgehendes Mitnehmersegment aufweisen muß, sondern vielmehr stattdessen auch zwei beabstandete Mitnehmernocken aufweisen kann.

Obschon es durchaus denkbar ist, daß die Mitnehmerbuchse und der Mitnehmerring als einstückiges Bauteil ausgebildet sein können, so mag es aus montagetechnischen Gründen vorteilhaft sein, den Mitnehmerring und die Mitnehmerbuchse aus zwei separaten Bauteilen zu bilden, die zur Drehmomentübertragung formschlüssig miteinander verbunden sind. Zu diesem Zweck kann der Mitnehmerring im Bereich seines Mitnehmersegmentes eine in radialer Richtung innen angeordnete Aussparung aufweisen, in welche wenigstens eine Mitnehmernase der Mitnehmerbuchse drehmomentübertragend eingreift.

Bei der Anordnung der Keilsegmente auf einem von diesen bereichsweise umfaßten Mitnehmerring tritt - wie prinzipiell bei jeder Lagerstelle - das nachfolgend genannte Problem auf. Wird nämlich eine Buchse auf einem Zylinder gelagert, so wie die bei der vorbekannten Lösung bei der Lagerung des Mitnehmers am Kragenzug des Beschlagteiles, so haben beide Teile normalerweise nur einen einzigen, als Tragpunkt wirksamen Kontaktpunkt, in welchem sie sich aufgrund des unvermeidlichen Spieles berühren. Dieser Kontaktpunkt wird sich stets in der aufgrund der Belastung der Lagerstelle resultierenden Kraft einstellen. Wechselt die Richtung dieser resultierenden Kraft, wie bei beispielsweise auftretender Schwellasteinwirkung am Sitz, so paßt sich dieser Kontaktpunkt stets der jeweils wirkenden Kraftrichtung an. Damit rollt also der Mitnehmer im Kragenzug des Beschlagteiles, was vom Sitzbenutzer als Lehnenspiel wahrgenommen wird. Ein negativer Qualitätseindruck und eine Störung des Fahrers durch Spielbewegungen während des Fahrbetriebes sind die Folge.

Um den vorgenannten Gegebenheiten zu begegnen, sind die erwähnten Traglinien definiert zu plazieren, die in bezug auf die Zahneingriffsstelle in bestimmter Winkellage dazu und auch zueinander im Bereich der Keilsegmente zwischen deren Innenflächen und dem Umfang des Mitnehmerringes verlaufen, weist der vom Mitnehmersegment freie Umfangsbereich des Mitnehmerringes eine gegenüber der gekrümmten Innenfläche der Keilsegmente abweichende Krümmung auf. So läßt sich beispielsweise der Unterschied der Krümmungen einerseits des vom Mitnehmersegment freien Umfangsbereiches des Mitnehmerringes und andererseits der Innenfläche jeden Keilsegmentes so wählen, daß die daraus resultierenden Tragpunkte zwischen Keilsegment und Mitnehmerring einen solchen Tragpunktwinkel gegenüber der Zahneingriffsstelle einnehmen, daß die Wirkungslinie der resultierenden Stützkraft innerhalb der Tragpunktwinkel verbleibt.

Um verschiedene Selbsthemmungsbedingungen der Keilsegmente bei gegebenen Reibpaarungen (Innenfläche des Keilsegmentes gegenüber Umfangsbereich des Mitnehmerringes) festlegen zu können, läßt sich der Zentralpunkt des Mitnehmerringes und damit auch sein Umfangsbereich gegenüber dem Zentrum, d.h. der Laufachse der Mitnehmerbuchse, um ein geringes Maß im positiven bzw. negativen Sinne in Richtung der Exzentrizität verschieben. Dadurch ist es möglich, bei gleichbleibendem Keilwinkel des Keilsegmentes den Tragpunktwinkel zu variieren, so daß die Möglichkeit gegeben ist, den Kraftschluß im System zu optimieren. Die Steuerwege der Keilsegmente sind nun nicht mehr vom Tragpunktwinkel des Keilsegmentes selbst abhängig, so daß der Leerweg beim Betätigen des Systems beeinflußt werden kann. Bei Einleitung einer Drehbewegung in den Mitnehmer kann sich der Keilspalt zwischen der Innenfläche des Keilsegmentes und dem Umfangsbereich des Mitnehmerringes verändern, wobei entweder das vor- oder nacheilende Keilsegment durch die exzentrische Bewegung der Außenkontur des Mitnehmerringes direkt angetrieben wird. Dadurch läßt sich der Leerweg verkürzen, so daß die Totzeit der Verstellung erheblich reduziert werden kann.

Zur definierten Festlegung des Tragpunktwinkels kann bei gleichbleibender Krümmung des freien Umfangsbereiches am Mitnehmerring die Innenfläche jeden Keilsegmentes in zwei Bereiche unterschiedlicher Krümmungen aufgeteilt werden, die ausgehend von der Schmalseite des Keilsegmentes einerseits und ausgehend von der Breitseite des Keilsegmentes andererseits einen jeweils harmonisch enger werdenden Keilspalt ergeben, und die Krümmungen jeden Keilsegments in einem Scheitelpunkt so zusammentreffen, daß er mit dem gewünschten Tragpunkt übereinstimmt und dort die Anlage zwischen Keilsegment und Umfangsbereich des Mitnehmerringes bildet. Zur definierten Festlegung des Tragpunktwinkels ist es auch möglich, bei gleichbleibender Krümmung der Innenflächen der Keilsegmente mit zu ihrer Außenfläche abweichendem Krümmungsradius, dessen Mittelpunkt vom Mittelpunkt des Mitnahmers abweichen kann, den jedem Keilsegment zugehörigen freien Umfangsbereich des Mitnehmerringes in zwei Bereiche unterschiedlicher Krümmungen aufzuteilen, die wiederum in einem Scheitelpunkt zusammentreffen, der mit dem Tragpunkt übereinstimmt und dort die Anlage zwischen Keilsegment und Umfangsbereich des Mitnehmerringes bildet. In diesem Fall liegen die Traglinien auf dem Umfangsbereich des Mitnehmers. Bei unterschiedlicher Stellung der Keilsegmente ändert sich daher die Lage der Traglinien nicht, und der Tragpunktwinkel bleibt erhalten.

Die Erfindung ist in einem Ausführungsbeispiel auf der Zeichnung dargestellt und wird nachfolgend näher erläutert. Es zeigen:

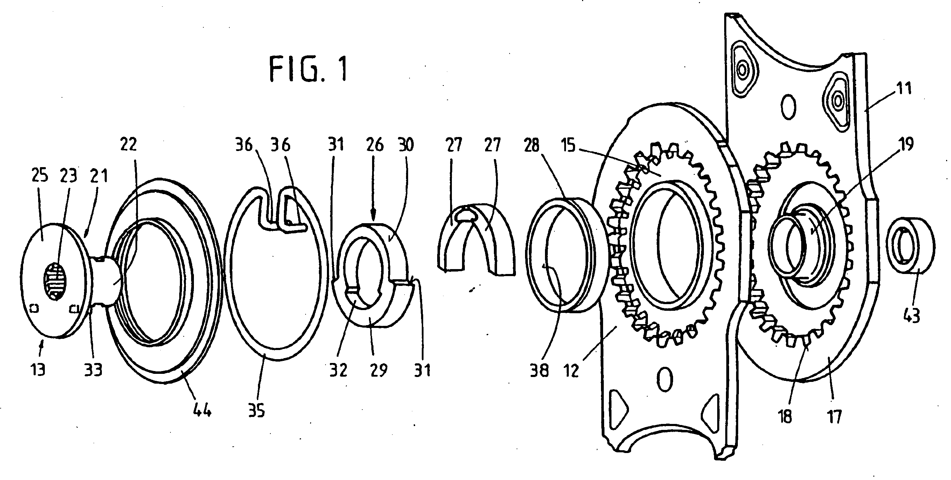

- Fig. 1: die Bauteile des erfindungsgemäßen Verstellbeschlages in einer perspektivischen Explosionsdarstellung,

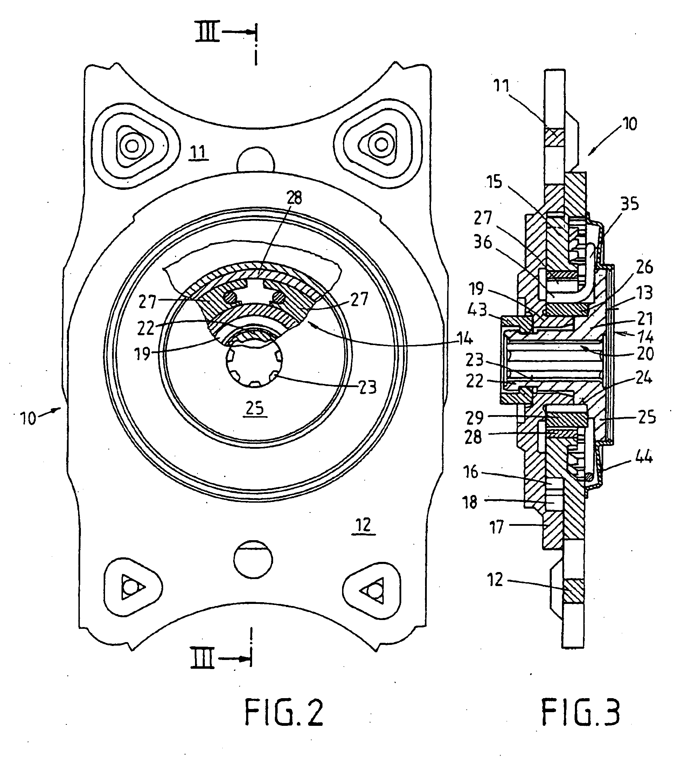

- Fig. 2: den in montiertem Zustand in aufgebrochener Ansicht dargestellten Verstellbeschlag,
- Fig. 3: den aus Fig. 2 ersichtlichen Verstellbeschlag in einem Längsschnitt nach der Linie III - III von Fig. 2,
- Fig. 4: den Exzenterabschnitt des aus den Fig. 2 und 3 ersichtlichen Verstellbeschlages, bei dem der mitnehmerfreie Außenumfangsbereich des Mitnehmerringes um ein die wirksame Exzentrizität verringerndes Maß in Richtung der Exzentrizität verschoben ist,
- Fig. 5: einen gegenüber Fig. 4 modifizierten Exzenterabschnitt, bei dem der mitnehmerfreie Außenumfangsbereich des Mitnehmerringes um ein die wirksame Exzentrizität vergrößerndes Maß in Richtung der Exzentrizität verschoben ist,
- Fig. 6: ein abgewickelt dargestelltes Prinzipbild des Exzenterabschnitts, bei dem keine Verschiebung des mitnehmersegmentfreien Außenumfangsbereiches des Mitnehmerringes vorgenommen wurde,
- Fig. 7: ein abgewickeltes Prinzipbild des Exzenterabschnitts, bei dem eine die Exzentrizität vergrößernde Verschiebung des mitnehmersegmentfreien Außenumfangsbereiches des Mitnehmerringes analog Fig. 5 vorgenommen wurde.

Es sei zunächst erwähnt, daß in den Figuren der Zeichnungen der Verstellbeschlag nur in einer solchen Form dargestellt ist, wie er für das Verständnis der Erfindung von Bedeutung ist. So ist insbesondere nicht dargestellt, wie der Verstellbeschlag auf beiden Längsseiten eines Sitzes zwischen der Rückenlehne und dem Sitzteil angeordnet sein kann, und es ist ferner nicht dargestellt, wie das Drehmoment in den Mitnehmer, beispielsweise auf einer Sitzlängsseite, eingeleitet und auf den anderen Verstellbeschlag auf der gegenüberliegenden Sitzlängsseite übertragen wird. Ferner ist der Sitz selbst nicht dargestellt, da dieser in üblichen und bekannten Ausführungsformen gestaltet sein kann.

Der den Sitzteil mit der Rückenlehne verbindende Verstellbeschlag 10 weist einen mit dem Sitzteil verbundenen, festen Beschlagteil 11 und einen mit der Rückenlehne verbundenen, gegenüber dem Beschlagteil 11 verstellbaren Beschlagteil 12 auf, wobei die Beschlagteile durch ein einen Exzenterabschnitt 14 umfassendes Stellglied 13 miteinander verbunden sind. Auch das Stellglied 13 ist Bestandteil einer als Getriebe ausgebildeten Ver- und Feststelleinrichtung, wozu auch ein beispielsweise durch Ausprägen aus dem Beschlagteil 12 gebildetes Stirnzahnrad 15 mit einer Außenverzahnung 16 gehört, die mit der Innenverzahnung 18 eines beispielsweise ebenfalls durch Ausprägen gebildeten Zahnkranzes 17 des Beschlagteiles 11 kämmt. Der Durchmesser des Kopfkreises der Außenverzahnung 16 ist um wenigstens eine Zahnhöhe kleiner als der Durchmesser des Fußkreises der Innenverzahnung 18. Demgemäß weisen die Verzahnungen 16 und 18 Zähnezahlen auf, die sich um wenigstens einen Zahn unterscheiden. Dies bedeutet, daß die Zähnezahl der Innenverzahnung 18 größer ist als die Zähnezahl der Außenverzahnung 16. Die dargestellte Anordnung ist derart gewählt, daß sich die Außenverzahnung 16 an der Innenverzahnung 18 abwälzen kann.

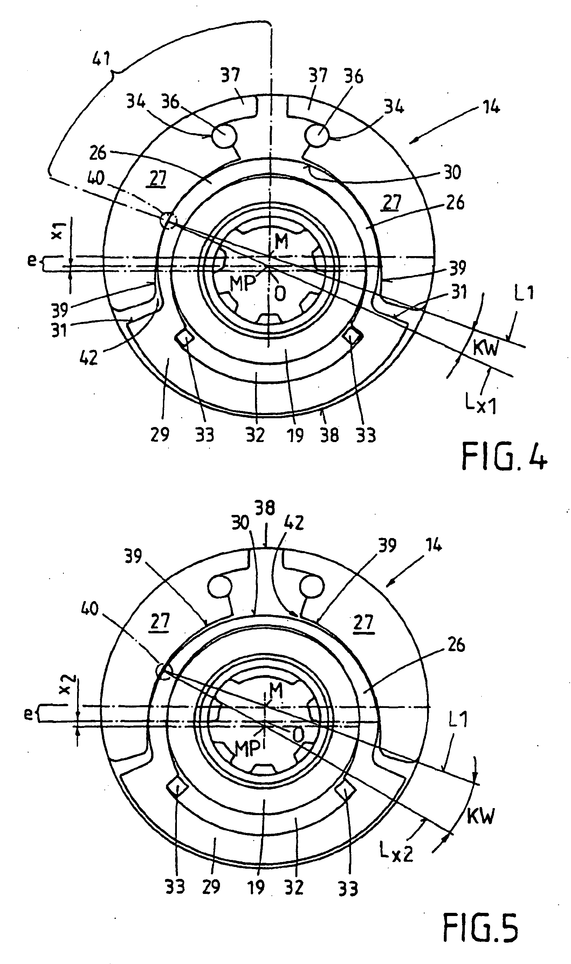

Der Beschlagteil 11 weist konzentrisch zu seiner Innenverzahnung 18 einen Kragenzug 19 auf, in welchem ein als Mitnehmerbuchse 21 ausgebildeter Mitnehmer 20 gelagert ist. Diese zum Exzenterabschnitt 14 gehörende Mitnehmerbuchse 21 weist eine Nabe 22 auf, die mit Spiel in den Kragenzug 19 des Beschlagteiles 11 eingreift. Diese Nabe 22 weist eine zu einem Keilwellenprofil passende Bohrung 23 auf. An diese Nabe 22 schließt eine durchmessergrößere Abstufung 24 an, die ihrerseits von einer durchmessergrößeren Scheibe 25 überragt wird. Die Abstufung 24 der Mitnehmerbuchse 21 nimmt bereichsweise einen Mitnehmerring 26 auf, auf welchem in an sich bekannter Weise zwei Keilsegmente 27 abgestützt sind, die mit ihren gekrümmten Außenflächen eine in den Beschlagteil 12 drehfest eingesetzte Buchse 28 lagern. Der Mitnehmerring 26 weist ein zwischen die Schmalseiten der Keilsegmente 27 mit Spiel fassendes Mitnehmersegment 29 auf (Fig. 4 und 5), das in radialer Richtung den vom Mitnehmersegment 29 freien Umfangsbereich 30 des Mitnehmerringes 26 - zwei Anschläge 31 bildend - überragt. Im Bereich des Mitnehmersegmentes 29 weist der Mitnehmerring eine sich in radialer Richtung erweiternde Aussparung 32 auf, die beim vorliegenden Beispiel segmentartig verläuft und an ihren beiden Enden Mitnehmernasen 33 der Mitnehmerbuchse 21 zur drehfesten Verbindung des Mitnehmerringes 26 mit der Mitnehmerbuchse 21 aufnimmt.

Die einander zugekehrten Breitseiten der Keilsegmente 27 weisen jeweils eine Ausnehmung 34 auf, in welche die Endfinger 36 einer Ringfeder 35 eingreifen, und die Keilsegmente 27 auseinanderdrücken. Oberhalb der Ausnehmung 34 ist an der Breitseite jeden Keilsegmentes 27 ein die Ausnehmung 34 überragender Vorsprung 37 angeordnet, wovon der eine Vorsprung den anderen Vorsprung beaufschlagen kann, wenn die Reibung bei bestimmten Belastungsverhältnissen während der Stellbewegung eine solche auf Blocklage der Keilsegmente 27 veranlaßt. Dabei versteht es sich, daß statt der aus den Fig. 4 und 5 am besten zu ersehenden Vorsprünge 37 oberhalb der Ausnehmungen 34 diese Vorsprünge auch unterhalb der Ausnehmungen 34 angeordnet sein können.

Wie am besten aus den Fig. 4 und 5 zu entnehmen ist, weisen die gekrümmten Außenflächen der Keilsegmente 27 etwa die gleiche Krümmung auf, wie der Innenumfang 38 der in den Beschlagteil 12 eingepreßten Buchse 28. Hingegen weist die gekrümmte Innenfläche 39 eines jeden Keilsegmentes 27 eine gegenüber dem vom Mitnehmersegment 29 freien Umfangsbereich 30 des Mitnehmerringes 26 abweichende Krümmung auf. Dadurch stellt sich eine Linienberührung der Keilsegmente 27 am Umfangsbereich 30 des Mitnehmerringes 26 ein, die in den Fig. 4 und 5 als Tragpunkt 40 markiert ist. Dieser Tragpunkt 40 stellt sich in einem zur Senkrechten - d.h. zur Eingriffstelle der Verzahnungen - bestimmten Winkel ein, der als Tragpunktwinkel 41 bezeichnet ist und den Winkel zwischen der Senkrechten und der Linie zwischen dem Tragpunkt 40 und der Mitte M des Innenumfanges 38 der im Beschlagteil 12 eingepreßten Buchse 28 einschließt.

Als Exzentrizität 'e' ist der Abstand zwischen der Mitte 'M' der in den Beschlagteil 12 eingepreßten Buchse 28 und der Mitte 'O' des Kragenzuges 19 am Beschlagteil 11 bezeichnet. Nun läßt sich einerseits eine Linie 'L1' ziehen zwischen dem Tragpunkt 40 und der Mitte 'M' der Buchse 28 des Beschlagteiles 12 und andererseits läßt sich eine Linie 'LX' ziehen zwischen dem Tragpunkt 40 und dem Mittelpunkt 'MP' des Mitnehmerringes 26. Der eingeschlossene Winkel zwischen den Linien 'L1' und 'LX' wird als Keilwinkel 'KW' bezeichnet und ist für die Selbsthemmungsbedingungen des Exzenterabschnittes 14 verantwortlich.

Bei vorgegebenem Tragpunktwinkel 40 läßt sich durch bestimmte Veränderungen der wirksamen Exzentrizität der Keilwinkel 'KW' variieren. Wie aus Fig. 4 ersichtlich ist, kann der Mittelpunkt 'MP' des Mitnehmerringes 26 um das Maß 'X1' in Exzenterrichtung nach innen verschoben angeordnet werden, so daß sich die wirksame Exzentrizität gegenüber dem Exzentermaß 'e' verringert. In diesem Fall verringert sich auch der Keilwinkel 'KW', wie aus Fig. 4 zu entnehmen ist. Im umgekehrten Fall läßt sich jedoch der Keilwinkel 'KW' auch vergrößern, wenn nämlich die wirksame Exzentrizität um das Maß 'X2' gegenüber dem Exzentermaß 'e' nach außen verschoben wird. Im ersten Fall findet eine negative Exzenterverschiebung statt, während im zweiten Fall die wirksame Exzentrizität durch eine positive Exzenterverschiebung erzielt wird. Dabei ergibt sich im ersten Fall eine Linie 'LX1', die zwischen dem Tragpunkt 40 und dem verschobenen Mittelpunkt 'MP' der wirksamen Exzentrizität verläuft, während im zweiten Fall sich eine Linie 'LX2' ergibt, die infolge einer Verschiebung der wirksamen Exzentrizität nach außen einen größeren Keilwinkel 'KW' nach sich zieht. Die Lage des Tragpunktes 40 läßt sich durch die Kontur des Umfangsbereiches 30 des Mitnehmerringes 26 bestimmen, worauf die Keilsegmente gelagert sind. Dabei können die Innenflächen 39 der Keilsegmente 27 von einem durchlaufenden Radius mit zum Stirnzahnrad 15 exzentrischen Mittelpunkt gebildet sein bzw. eine solch andere Kontur aufweisen, die einen harmonisch enger werdenden Keilspalt 42 ergibt. Dadurch ergeben sich die Vorteile, daß der Tragpunktwinkel 41 für alle Toleranzlagen der Exzentrizitäten annähernd gleichbleibt, und auch der für die Selbsthemmungsbedingungen des Exzenterabschnittes 14 wirksame Keilwinkel 'KW' gleich bleibt. Somit sind die Schwankungen der Kraftrichtung der Keilkraft geringer, die deshalb unter Beachtung der Spielfreistellfunktion näher an das sich aus der Verzahnung ergebende Kraftoptimum gelegt werden kann. Der Vollständigkeit halber sei noch erwähnt, daß der in Gebrauchslage montierte Verstellbeschlag in axialer Richtung durch einen Ring 43 gesichert ist, der mit Vorsprüngen in entsprechende Nuten in der Nabe 22 eingreift. Als Schutz vor Verunreinigungen des Exzenterabschnittes dient ein Dichtring 44, der an der Scheibe 25 der Mitnehmerbuchse 21 festgelegt ist.

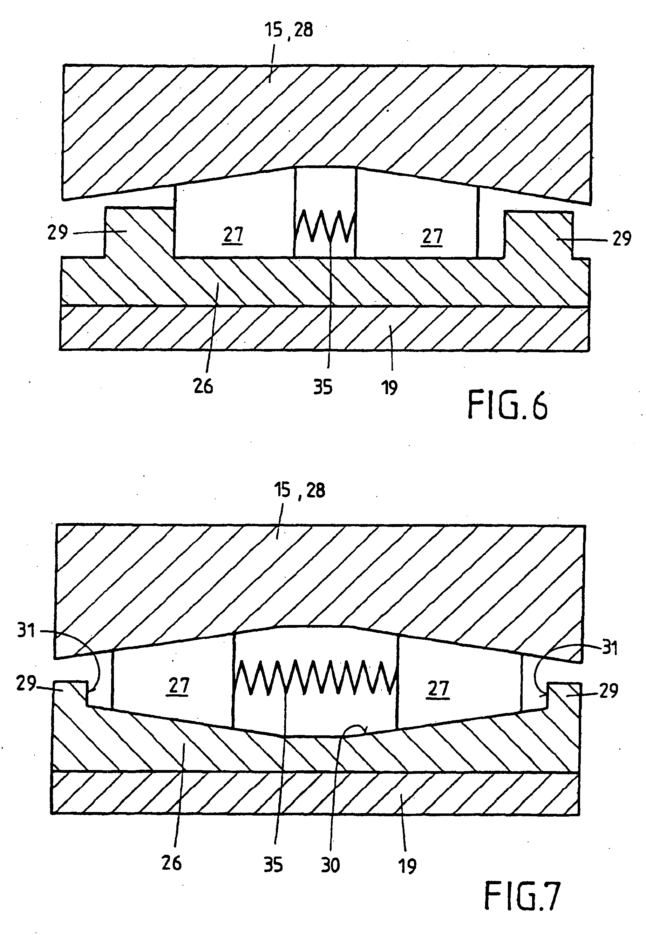

Die Figuren 6 und 7 stellen Prinzipbilder dar, wobei es sich bei Fig. 6 um den abgewickelten Exzenterabschnitt eines Verstellbeschlages der vorgenannten Art handelt, bei dem keine Verschiebung der Exzentrizität vorgenommen wurde. In Fig. 7 ist hingegen der Exzenterabschnitt in abgewickelter Form dargestellt, wobei der Exzentrizität 'e' eine positive Exzenterverschiebung 'X2' hinzugefügt worden ist, wie dies aus Fig. 5 ersichtlich ist.

Wie bereits erwähnt, ist die Erfindung in Ausführungsbeispielen dargestellt, jedoch keinesfalls allein darauf beschränkt. Es sind vielmehr noch mancherlei Änderungen im Rahmen der nachfolgenden Ansprüche denkbar.

### Bezugszeichenliste

- 10: Verstellbeschlag
- 11: Beschlagteil, fest
- 12: Beschlagteil, verstellbar
- 13: Stellglied
- 14: Exzenterabschnitt
- 15: Stirnzahnrad, an 12
- 16: Außenverzahnung, von 15
- 17: Zahnkranz, an 11
- 18: Innenverzahnung, von 17
- 19: Kragenzug, an 11
- 20: Mitnehmer
- 21: Mitnehmerbuchse
- 22: Nabe, von 21
- 23: Bohrung, von 22
- 24: Abstufung, von 21
- 25: Scheibe, an 21
- 26: Mitnehmerring
- 27: Keilsegment
- 28: Buchse
- 29: Mitnehmersegment, von 26
- 30: Umfangsbereich, an 26
- 31: Anschlag, an 26
- 32: Aussparung, in 29
- 33: Mitnehmernase, von 21
- 34: Ausnehmung, an 37
- 35: Ringfeder
- 36: Endfinger, von 35
- 37: Vorsprung, an 27
- 38: Innenumfang, von 28
- 39: Innenfläche, von 27
- 40: Tragpunkt
- 41: Tragpunktwinkel
- 42: Keilspalt
- 43: Ring
- 44: Dichtring

- e: Exzentriztität
- M: Mitte, von 28
- O: Mitte, von 19
- MP: Mittelpunkt, von 26
- L1: Linie, 40 bis M
- LX: Linie, 40 bis MP
- KW: Keilwinkel
- X1: negative Exzenterverschiebung
- X2: positive Exzenterverschiebung

## Patentansprüche

1. Verstellbeschlag für Sitze mit neigungseinstellbarer Lehne, insbesondere für Kraftfahrzeugsitze, bei denen ein dem Sitzteil zugeordneter, fester Beschlagteil (11) und ein der Lehne zugeordneter, verstellbarer Beschlagteil (12) über ein Stellglied (13) miteinander verbunden sind,
wobei eine die Lage beider Beschlagteile (11, 12) zueinander bestimmende, als Getriebe ausgebildete Ver- und Feststelleinrichtung vorgesehen ist, und das Stellglied (13)
einen Exzenterabschnitt (14) beinhaltet, auf dem der eine Beschlagteil (12) gelagert ist, während der andere Beschlagteil (11) den Exzenterabschnitt (14) lagert, der aus zwei einen Mitnehmer (20) bereichsweise überdeckenden, gegeneinander geneigten Keilsegmenten (27), aus einem zwischen deren Schmalseite fassenden Mitnehmersegment (29) und aus einem die Breitseiten der Keilsegmente (27) auseinanderdrückenden Kraftspeicher (35) gebildet ist,
wobei das Stellglied (13) bedarfsweise
eine zentrale Aufnahme zur drehfesten Verbindung mit einer Übertragungsstange aufweist,
**dadurch gekennzeichnet,**
**dass** der Mitnehmer (20) aus einer Mitnehmerbuchse (21) und einem damit drehfest verbundenen, das Mitnehmersegment (29) aufweisenden Mitnehmerring (26) gebildet ist,
wobei der Mitnehmerring (26) an einem Kragenzug (19) des anderen Beschlagteils (11) gelagert ist und auf seinem vom Mitnehmersegment (29) freien Umfangsbereich (30) seinerseits die Keilsegmente (27) lagert.

2. Verstellbeschlag nach Anspruch 1, **dadurch gekennzeichnet, daß** der Mitnehmerring (26) und die Mitnehmerbuchse (21) aus zwei separaten Bauteilen gebildet sind, die zur Drehmomentübertragung formschlüssig miteinander verbunden sind.

3. Verstellbeschlag nach Anspruch 2, **dadurch gekennzeichnet, daß** der Mitnehmerring (26) im Bereich seines Mitnehmersegmentes (29) eine in radialer Richtung innen angeordnete Aussparung (32) aufweist, in welche wenigstens eine Mitnehmernase (33) der Mitnehmerbuchse (21) drehmomentübertragend eingreift.

4. Verstellbeschlag nach einem der vorhergehenden Ansprüche, **dadurch gekennzeichnet, daß** der vom Mitnehmersegment (29) freie Umfangsbereich (30) des Mitnehmerringes (26) eine gegenüber der gekrümmten Innenfläche (39) der Keilsegmente (27) abweichende Krümmung aufweist.

5. Verstellbeschlag nach Anspruch 4, **dadurch gekennzeichnet, daß** der Innenumfang des Mitnehmerringes (26) solche Krümmungen aufweist, daß daraus resultierende Tragpunkte zwischen Kragenzug (19) des anderen Beschlagteiles (11) und Mitnehmerring (26) einen solchen Tragpunktwinkel (41) gegenüber der Zahneingriffsstelle einnehmen, daß die Wirkungslinie der resultierenden Stützkraft innerhalb der Tragpunktwinkel (41) verbleibt.

6. Verstellbeschlag nach Anspruch 5, **dadurch gekennzeichnet, daß** bei gleichbleibender Krümmung des freien Umfangsbereiches (30) am Mitnehmerring (26) die Innenfläche (39) jeden Keilsegmentes (27) zwei Bereiche unterschiedlicher Krümmungen besitzt, die ausgehend von der Schmalseite des Keilsegmentes (27) einerseits und ausgehend von der Breitseite des Keilsegmentes (27) andererseits einen jeweils harmonisch enger werdenden Keilspalt (42) ergeben, und die Krümmungen jeden Keilsegmentes (27) in einem Scheitelpunkt zusammentreffen, der mit dem Tragpunkt (40) übereinstimmt und dort die Anlage zwischen Keilsegment (27) und Umfangsbereich (30) des Mitnehmerringes (26) bildet.

7. Verstellbeschlag nach Anspruch 5, **dadurch gekennzeichnet, daß** bei gleichbleibender Krümmung der Innenflächen (39) der Keilsegmente (27) der jedem Keilsegment (27) zugehörige freie Umfangsbereich (30) des Mitnehmerringes (26) zwei Bereiche unterschiedlicher Krümmungen aufweist, die in einem Scheitelpunkt zusammentreffen, der mit dem Tragpunkt (40) übereinstimmt und dort die Anlage zwischen Keilsegment (27) und Umfangsbereich (30) des Mitnehmerringes (26) bildet, von wo aus sich ein in beiden Richtungen harmonisch weiterwerdender Keilspalt (42) ergibt.

8. Verstellbeschlag nach einem der vorhergehenden Ansprüche, **dadurch gekennzeichnet, daß** bei vorgegebenem Tragpunktwinkel (41) der Keilwinkel (KW) **dadurch** veränderbar ist, daß der Mittelpunkt des verwendeten Mitnehmerrings (26) gegenüber der Exzentrizität (e) im negativen Sinne (X1) oder im positiven Sinne (X2) verschoben ist.

## Claims

1. Adjustment armature for seats with an adjustable inclinable backrest, particularly for seats in motor vehicles, wherein a fixed armature part associated with the seat part and an adjustable armature part associated with the backrest are connected to one another by an actuating member, wherein an adjusting and locking device, determining the position of the two armature parts relative to one another and configured as a gear, is provided, and wherein the actuating member (13) comprises an eccentric segment on which one of the armature parts is supported while the other armature part supports the eccentric segment, which eccentric segment is formed by two wedge segments partially covering a driver (20) and inclined relative to one another, a driver segment engaged between their narrow sides, and power storage means forcing the wide sides of the wedge segments apart, wherein the actuating member, if necessary, has a central receiving section for non-rotational connection to a transmission rod,
**characterised in that,**
the driver (20) is formed by a driver bushing (21) and a driver ring (26) non-rotationally connected thereto and comprising the driver segment (29),
wherein the driver ring (26) is supported on a projecting collar (19) of the other armature part (11) and supports, in turn, the wedge segments (27) on its circumferential area (30) free of the driver segment (29).

## Revendications

1. Mécanisme de réglage pour des sièges à dossier à inclinaison réglable, en particulier des sièges de véhicules automobiles, pour lesquels une partie de mécanisme fixe, associée à la partie d'assise, et une partie de mécanisme réglable, associée au dossier, sont reliées ensemble par un organe de réglage, un dispositif de verrouillage et de blocage étant prévu, réalisé sous forme de transmission à engrenage déterminant la position mutuelle des deux parties de mécanisme, et l'organe de réglage (13) contenant un tronçon d'excentrique, sur lequel une partie de mécanisme est montée, tandis que l'autre partie de mécanisme sert au montage du tronçon d'excentrique, formé de deux segments cunéiformes, inclinés l'un par rapport à l'autre, recouvrant, au moins par zones, un organe d'entraînement (20) d'un segment d'organe d'entraînement s'insérant entre leur face étroite, et d'un accumulateur de force repoussant à l'écart l'une de l'autre les faces larges des segments cunéiformes ; l'organe de réglage, en cas de besoin, présentant un logement central, pour fournir une liaison assujettie en rotation à une tige de transmission,
**caractérisée en ce que**
l'organe d'entraînement (20) est formé d'une douille d'organe d'entraînement (21) et d'une bague d'organe d'entraînement (26), lui étant reliée de façon assujettie en rotation et présentant le segment d'organe d'entraînement (29), la bague d'organe d'entraînement (26) étant montée sur un tronçon de collerette (19) de l'autre partie de mécanisme (11) et servant de son côté, sur sa zone périphéerique (30), excempte du segment d'organe d'entraînement (29), au montage des segments cunéiformes (27).
